# FASCICULE DE BREVET EUROPEEN

(11) **EP 1 014 068 B1**
(45) Date de publication et mention de la délivrance du brevet: **19.10.2005**
(21) Numéro de dépôt: 99403154.0
(22) Date de dépôt: 16.12.1999
(51) Int. Cl.: G01M 3/02

(54) **Machine pour tester au moins deux pièces de type différent**
Maschine zum Testen von mindestens zwei unterschiedlichen Stücken
Machine for testing at least two different types of pieces

(30) Priorité: 23.12.1998 FR 9816300
(43) Date de publication de la demande: 28.06.2000
(73) Titulaire: SOCIETE DE TRAITEMENT AUTOMATIQUE CONTROLE ET ETANCHEITE "TRACE", 94633 Rungis (FR)
(72) Inventeur: Amiel, Jacques, 92140 Clamart (FR)
(74) Mandataire: Flavenot, Bernard

(56) Documents cités:
- EP-A- 0 122 551
- FR-A- 2 647 385
- US-A- 4 949 510
- US-A- 5 709 303
- PATENT ABSTRACTS OF JAPAN vol. 011, no. 173 (P-582), 4 juin 1987 (1987-06-04) & JP 62 005144 A (MAZDA MOTOR CORP), 12 janvier 1987 (1987-01-12)
- PATENT ABSTRACTS OF JAPAN vol. 005, no. 064 (P-059), 30 avril 1981 (1981-04-30) & JP 56 016841 A (MITSUBISHI MOTORS CORP), 18 février 1981 (1981-02-18)
- PATENT ABSTRACTS OF JAPAN vol. 1997, no. 10, 31 octobre 1997 (1997-10-31) & JP 09 159566 A (MITSUBISHI MOTORS CORP), 20 juin 1997 (1997-06-20)

## Description

La présente invention concerne les machines permettant de tester au moins deux pièces de type différent aptes à se présenter dans un ordre indéterminé sur un chemin de déplacement, par exemple, à titre d'application particulièrement avantageuse, pour tester l'étanchéité de différentes pièces de mécanique en sortie d'une chaîne d'usinage, par exemple des pièces réalisées pour l'industrie automobile comme les culasses, carters de moteurs automobiles ou analogues (voir par exemple EP-A-0 122 551).

Il existe déjà des machines permettant de tester des pièces de type différent aptes à se présenter dans un ordre indéterminé sur un chemin de déplacement, par exemple pour contrôler l'étanchéité des culasses, carters de moteurs automobiles ou analogues en sortie d'une chaîne d'usinage.

Ces machines selon l'art antérieur sont en fait conçues essentiellement pour tester un seul type de culasse. Dans ces conditions, si une chaîne de fabrication produit plusieurs types de culasse, il est nécessaire de prévoir autant de machines que de types de pièces à tester, et donc également autant de dispositifs périphériques comme des robots de manipulation, des capteurs de reconnaissance ou identification, des cellules de test, etc.

Ces machines de test selon l'art antérieur ne présentent donc pas la flexibilité d'utilisation que les techniciens souhaitent pouvoir obtenir aujourd'hui et on conçoit que les tests effectués avec ces machines contribuent à augmenter le prix de revient des pièces produites.

La présente invention a donc pour but de réaliser une machine permettant d'effectuer des tests sur des pièces mécaniques produites à la chaîne, notamment des tests dits "en bord de ligne", qui pallie les inconvénients des machines du même type selon l'art antérieur, en présentant par exemple une relativement bonne flexibilité d'utilisation permettant de contrôler des pièces de types différents et de réduire en conséquence le coût de fabrication de ces pièces par rapport à ceux obtenus avec les machines de test de l'art antérieur.

Plus précisément, la présente invention a pour objet une machine permettant de tester au moins deux pièces de type différent aptes à se présenter dans un ordre indéterminé sur un chemin de déplacement, chaque pièce comportant au moins une entrée apte à être alimentée en un fluide ou analogue, caractérisée par le fait qu'elle comporte:
- un bâti conformé sensiblement en "dais" et comprenant un plancher apte a être dans une position sensiblement horizontale, un plafond et des montants pour maintenir ledit plafond dans une position sensiblement parallèle au plancher,
- un arbre,
- des moyens pour monter ledit arbre en rotation par rapport au plancher et au plafond autour d'un axe sensiblement vertical,
- des moyens pour commander la rotation dudit arbre,
- deux plateaux,
- des moyens pour solidariser les deux plateaux avec ledit arbre de façon qu'ils soient sensiblement dans deux plans horizontaux entre le plancher et le plafond, à une distance l'un de l'autre supérieure à la hauteur de la plus haute des deux dites pièces,
- deux premier et second berceaux de réception, respectivement des deux dites pièces, ces deux berceaux étant réalisés sur la face supérieure du plateau inférieur,
- au moins deux premier et second connecteurs-adaptateurs montés en coopération avec au moins l'un des deux plateaux de façon que, lorsque les deux pièces sont respectivement disposées dans leur berceau de réception, le premier connecteur-adaptateur soit apte à coopérer, via une commande adaptée, avec l'entrée de la pièce située dans le premier berceau de réception et que le second connecteur-adaptateur soit apte à coopérer, via une commande adaptée, avec l'entrée de la pièce située dans le second berceau de réception,
- un connecteur d'alimentation en fluide,
- des moyens pour associer le connecteur d'alimentation en fluide audit bâti de façon que, lors d'une commande de la rotation des plateaux par l'intermédiaire de l'arbre de rotation, les deux premier et second connecteurs-adaptateurs soient aptes à venir en position de coopération avec le connecteur d'alimentation en fluide, et
- des moyens pour commander, d'une part la coopération du connecteur d'alimentation en fluide avec un connecteur-adaptateur et d'autre part la coopération de ce connecteur-adaptateur avec l'entrée de la pièce qui lui est associée.

D'autres caractéristiques et avantages de la présente invention apparaîtront au cours de la description suivante donnée en regard des dessins annexés à titre illustratif, mais nullement limitatif, dans lesquels:
la figure 1 représente, en vue partielle, le schéma de principe d'une machine selon l'invention permettant de tester au moins deux pièces de type différent se présentant dans un ordre indéterminé sur un chemin de déplacement, et
Les figures 2, 3 et 4 représentent, respectivement en vue de face, de côté et de dessus, un mode de réalisation préférentiel d'une machine selon l'invention dans une application particulièrement avantageuse au contrôle de l'étanchéité de culasses ou carters de blocs moteurs de quatre types différents.

La Demanderesse tient à préciser que ces figures ne représentent que deux exemples de mode de réalisation de l'objet selon l'invention, et qu'il peut exister d'autres modes de réalisation qui répondent à la définition de cette invention, notamment celle donnée dans la première revendication.

Elle précise en outre que, lorsque, selon la définition de l'invention, l'objet de l'invention comporte "au moins un" élément ayant une fonction donnée, le mode de réalisation décrit peut comporter plusieurs de ces éléments.

Elle précise aussi que, si le mode de réalisation de l'objet selon l'invention tel qu'illustré comporte plusieurs éléments de fonction identique et que si, dans la description, il n'est pas spécifié que l'objet selon cette invention doit obligatoirement comporter un nombre particulier de ces éléments, l'objet de l'invention pourra être défini comme comportant "au moins un" de ces éléments.

En outre pour la simplification de la description qui va suivre, les mêmes références désignent, sur l'ensemble des quatre figures, les mêmes moyens, quelle que soit la figure sur laquelle elles apparaissent et quelle que soit la forme de représentation de ces moyens.

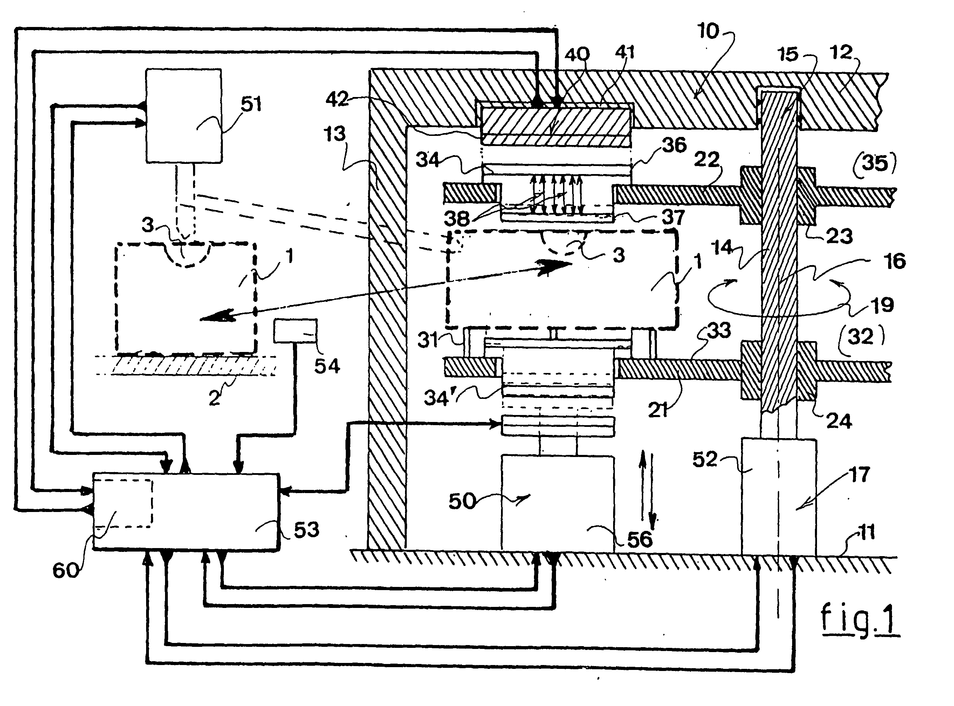

La description faite ci-après se réfère donc indifféremment à l'une ou l'autre des figures 1 à 4.

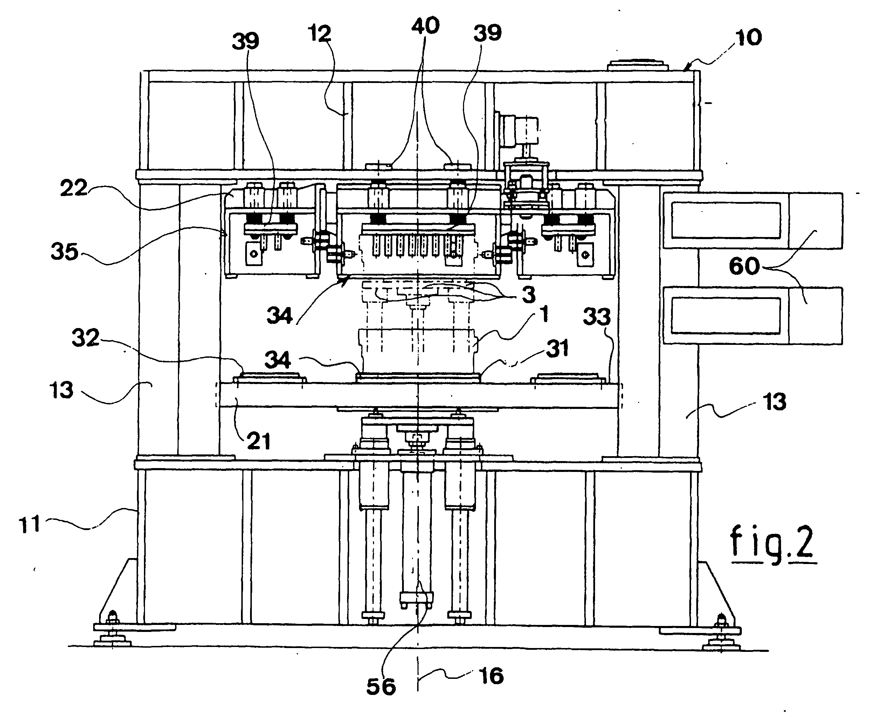

La machine selon l'invention permet de tester au moins deux pièces 1 de type différent aptes à se présenter dans un ordre indéterminé sur un chemin de déplacement 2, par exemple sur le tapis d'un convoyeur, chaque pièce comportant au moins une entrée schématiquement représentée par la référence 3, qui est apte à être alimentée en un fluide ou analogue. La machine selon le mode de réalisation illustré sur les figures 2 à 4 permet de tester quatre pièces de type différent.

Il est tout d'abord précisé que, au sens de la présente description, par "pièce" on entend tout élément mécanique ayant une fonction donnée, quel que soit son procédé de fabrication, sur lequel il est nécessaire d'effectuer des tests, contrôles ou analogues pour vérifier s'il est apte à assurer fonction pour laquelle il est conçu.

A titre d'exemple, pour faciliter la compréhension de l'invention, la description va être donnée dans le cas d'une pièce particulière, une culasse de moteur automobile sur laquelle il est nécessaire de contrôler l'étanchéité des cavités qu'elle peut comporter et, éventuellement, le fonctionnement d'une sonde qui y est intégrée.

Quant au terme "entrée 3", il doit être compris comme tout moyen qui permet de recevoir et/ou conduire, quel que soit son sens de propagation, son intensité, etc, un fluide pris dans son acception la plus large possible, c'est-à-dire un gaz et/ou un liquide et/ou un faisceau lumineux et/ou un signal électrique, etc.

La machine selon l'invention comporte un bâti 10 en forme générale de "dais", comprenant un plancher 11 apte à être dans une position sensiblement horizontale, un plafond 12 et des montants 13, par exemple au nombre de quatre, figures 2 à 4, pour maintenir le plafond 12 dans une position sensiblement parallèle au plancher.

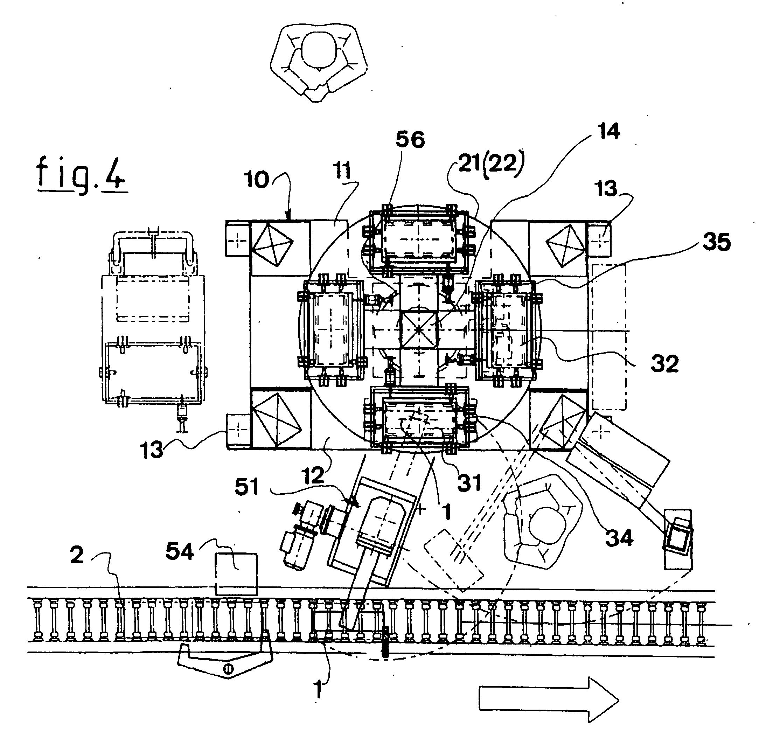

La machine comporte un arbre 14 et des moyens 15 pour monter cet arbre 14 en rotation, dans un sens ou dans l'autre illustré par la double-flèche 19, par rapport au bâti 10 autour d'un axe 16 sensiblement vertical, cet arbre se trouvant avantageusement sensiblement au centre du bâti 10 comme représenté sur les figures, notamment sur la figure 4. Ces moyens 15 sont généralement constitués par des paliers à roulements à billes, aiguilles ou analogues réalisés dans le plancher et le plafond.

La machine comporte en outre des moyens 17 pour commander la rotation de l'arbre 14, par exemple un moteur commandable 52 du type électrique ou analogue dont la sortie est couplée par tout moyen à l'arbre de rotation 14.

Cette machine comporte aussi deux plateaux 21, 22 et des moyens 23, 24, comme des manchons de fixation, pour solidariser ces deux plateaux avec l'arbre 14. Ces plateaux sont fixés sur l'arbre 14 de façon qu'ils soient sensiblement dans deux plans horizontaux et positionnés entre le plancher 11 et le plafond 12. Ils sont de plus situés à une distance l'un de l'autre supérieure à la hauteur de la plus haute des deux pièces 1, plus généralement des types de pièces à tester, c'est-à-dire des quatre culasses dans le cas de la réalisation illustrée sur les figures 2 à 4.

Sur la face supérieure 33 du plateau inférieur 21 sont agencés au moins deux berceaux 31, 32 de réception des deux pièces 1. Dans le mode de réalisation selon les figures 2 à 4, ces berceaux de réception sont au nombre de quatre.

La machine selon l'invention comporte en outre au moins deux connecteurs-adaptateurs 34, 35 montés en coopération avec au moins l'un des deux plateaux 21, 22 de façon que, lorsque les deux pièces 1 sont respectivement disposées dans leur berceau de réception 31, 32, le premier connecteur-adaptateur 34 soit apte à coopérer, via une commande adaptée, avec l'entrée (ou les entrées) 3 de la pièce 1 située dans le berceau de réception 31, et que le second connecteur-adaptateur 35 soit apte à coopérer, via une commande adaptée, avec l'entrée (ou les entrées) 3 de la pièce située dans l'autre berceau de réception 32.

Dans le cas de la figure 1, le mode de réalisation comporte deux connecteurs-adaptateurs 34, 34' associés respectivement aux deux plateaux 21, 22 pour être apte à coopérer avec une pièce 1 disposée sur le berceau 31.

Il est en outre précisé que le terme "connecteur-adaptateur" est utilisé dans la présente description pour désigner, de façon générique, tout système qui permet de relier, selon une loi de liaisons donnée 38, une première pluralité de bornes de connexion 36 de fluides au sens de la présente description défini ci-avant et une seconde pluralité de bornes de connexion 37 apte à coopérer avec une pièce à tester de type donné. Quant aux premières pluralités de bornes de connexion 36 de tous les connecteurs-adaptateurs 34, 35, ..., elles sont toutes identiques et complémentaires des bornes de sortie 42 d'un connecteur d'alimentation en fluides 40 comme décrit ci-après.

De tels connecteurs-adaptateurs au sens de la présente description sont bien connus en eux-mêmes. Ils sont par exemple réalisés à base de plaques de connexion à liaisons multiples comme celles commercialisées sous la marque de commerce "STAUBLI".

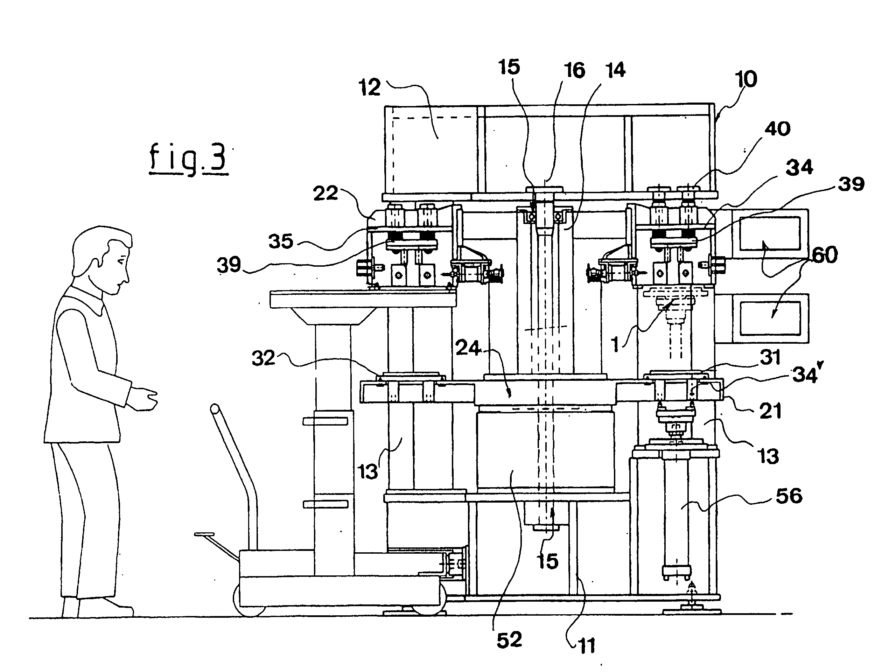

Sur les figures 2 à 4, est illustré un mode de réalisation avantageux de tels connecteurs-adaptateurs. Ils se présentent plus particulièrement sous la forme d'une cloche qui peut recouvrir au moins le sommet de la pièce à tester, dans laquelle est montée au moins une plaque à liaisons multiples 39 pour différents fluides, figures 2 et 3, par exemple une plaque du type STAUBLI définie ci-dessus.

Dans une réalisation particulièrement avantageuse, les connecteurs-adaptateurs 34, 35, ... sont montés en translation libre par rapport aux plateaux de façon que, sous l'action d'une commande appropriée, par exemple une poussée en translation, il soit possible de les amener à coopérer avec les entrées 3 des pièces à tester et/ou avec les sorties 42 du connecteur d'alimentation 40.

La machine comporte en effet en outre un connecteur d'alimentation en fluides 40 et des moyens 41 pour associer ce connecteur d'alimentation en fluides 40 au bâti 10 de façon que, lors d'une commande appropriée de la rotation des plateaux 21, 22 par l'intermédiaire de l'arbre 14 sous l'action du moteur 52, l'un des connecteurs-adaptateurs 34, 35 soit apte à venir en position de coopération avec le connecteur d'alimentation 40.

Le connecteur d'alimentation 40 est relié à des moyens de tests 60 qui sont bien connu en eux-mêmes et qui ne seront pas décrits plus spécifiquement ici dans le seul souci de simplifier la description, d'autant plus que la Demanderesse en commercialise déjà qui donnent toute satisfaction.

Ces moyens de tests 60 peuvent par exemple être intégrés à une unité centrale de gestion 53 comme celle qui sera décrite ci-après.

La machine comporte en outre des moyens 50 pour commander, d'une part la coopération du connecteur d'alimentation en fluide 40 avec un connecteur-adaptateur 34, 35, et d'autre part la coopération de ce connecteur-adaptateur 34, 35 avec l'entrée 3 de la pièce 1 qui lui est associée.

Dans une réalisation particulièrement avantageuse, ces moyens 50 pour commander, d'une part la coopération du connecteur d'alimentation en fluide 40 avec un connecteur-adaptateur 34, 35, et d'autre part la coopération de ce connecteur-adaptateur 34, 35 avec l'entrée 3 de la pièce 1 qui lui est associée, comportent au moins un vérin 56 constitué d'un cylindre et d'une tige de cylindre, le cylindre étant monté solidaire du plancher 11 de façon que la tige de cylindre se déplace par rapport au cylindre sensiblement suivant une direction verticale pour venir coopérer avec l'ensemble des éléments suivants de la machine : pièce à tester 1, connecteurs-adaptateurs 34, 34', 35 et connecteur d'alimentation 40.

De cette façon, les forces d'action et de réaction engendrées par le vérin 56 pour permettre la coopération des connecteurs-adaptateurs, du connecteur d'alimentation et de la pièce à tester sont absorbées par le plancher 11 et le plafond 12 via les montants 13, et n'ont donc aucun effet sur l'arbre de rotation 14 et les paliers 15 qui le supportent.

Dans une réalisation préférentielle, la machine comporte en outre par exemple un robot 51qui peut prélever une pièce 1 se présentant sur le chemin de déplacement 2, la positionner sur le berceau de réception 31, 32 lui correspondant sur le plateau inférieur 21 et, réciproquement, l'enlever de son berceau pour la diriger vers le lieu qui lui est destiné après qu'elle ait été testée comme décrit ci-après.

De même, pour identifier le type de pièce à tester 1 qui se présente sur le chemin de déplacement 2, la machine comporte avantageusement un capteur d'identification 54.

Il est bien évident qu'une telle machine peut fonctionner en semi-automatique. Cependant, de par sa structure, elle présente notamment l'avantage de pouvoir être presque en totalité automatisée. A cette fin, elle comporte une unité centrale de gestion 53, du type ordinateur ou automate programmable, reliée aux entrées-sorties du vérin 56, du moteur commandable 52, du robot 51 et du capteur d'identification 54.

La machine décrite ci-avant en regard des figures 1 à 4 fonctionne et s'utilise de la façon suivante:

Il est tout d'abord rappelé que, à titre d'exemple d'application de la machine selon l'invention, la machine selon le mode de réalisation décrit ci-dessus est plus particulièrement destinée au contrôle d'au maximum quatre types différents de pièces 1 comme des culasses ou des carters de blocs moteurs de véhicules automobiles.

Dans ces conditions, les plateaux 21, 22 sont configurés pour recevoir quatre types de culasses possibles, le plateau 21 comportant quatre berceaux 31, 32, .... Les connecteurs-adaptateurs 34, 34', 35, ... sont eux aussi configurés pour pouvoir s'accoupler avec les différents orifices 3 des culasses à tester pour y introduire les fluides de façon à tester leur étanchéité. Les tests d'étanchéité ne faisant pas partie de la présente invention et étant connus en eux-mêmes, ils ne seront pas décrits ici. Le connecteur d'alimentation en fluides 40 est lui aussi configuré pour être apte à être relié à l'ensemble des connecteurs-adaptateurs 34, 35.

Lorsque la machine est ainsi configurée, les culasses à tester arrivent sur le convoyeur 2 jusqu'au niveau du capteur d'identification 54 qui identifie le type de culasse détecté.

Le capteur envoie un signal à l'unité centrale de gestion 53 correspondant au type de culasse détecté. L'unité centrale de gestion analyse ce signal et élabore, tout d'abord, deux ordres de commande. Un premier ordre est envoyé à l'entrée de commande un moteur 52 pour entraîner en rotation l'arbre 14, et de facto les deux plateaux 21, 22, de façon que l'ensemble "berceau et connecteur-adaptateur" correspondant au type de culasse détecté vienne se positionner pour être apte à coopérer avec le connecteur d'alimentation 40 et le vérin 56. Le second ordre est appliqué à l'entrée de commande du robot 51 pour qu'il prélève la culasse détectée et l'apporte sur le berceau 31, lui correspondant, amené en position de coopération avec le connecteur d'alimentation 40 et le vérin 56.

L'unité centrale de gestion 53 délivre alors un ordre de commande au vérin 56 pour qu'il amène en coopération le connecteur-adapateur 34' avec la culasse, la culasse avec le connecteur-adaptateur 34, et le connecteur-adaptateur 34 avec le connecteur d'alimentation en fluides 40.

Il est bien évident que, en fonction de la structure des culasses de moteurs actuels, les connecteurs-adaptateurs 34 et le connecteur d'alimentation en fluides 40 peuvent comporter des connexions multiples, par exemple des bouchons pour obturer certains orifices, des embouts pour alimenter des cavités en gaz sous pression, des broches électriques à connecter à des sondes intégrées dans les culasses, etc (figures 2 à 4).

Quand l'ensemble de ces connexions est effectué, les tests sont accomplis selon les techniques bien connues de l'art antérieur, puis l'unité centrale de gestion envoie des ordres, sur le vérin 56 pour déconnecter la pièce testée 1 et les connecteurs-adaptateurs 34, 34', et sur le robot 1 pour enlever la pièce testée hors de son berceau 31 et la diriger vers l'endroit prévu en fonction du résultat des tests.

Le processus décrit ci-dessus peut bien entendu se répéter pour chaque culasse à tester qui se présente sur le convoyeur 2 au niveau du capteur d'identification 54, les deux plateaux 21, 22 se positionnant, chaque fois, en regard du vérin 56 et du connecteur d'alimentation en fluides 40 selon le type de culasse détecté.

A la description précédente de la structure de la machine selon l'invention et de son fonctionnement, il apparaît que cette machine présente de nombreux avantages par rapport aux machines de l'art antérieur telles que celles rappelées dans le préambule de la présente description. Ces avantages sont principalement, en plus de ceux soulignés ci-avant: un encombrement réduit, l'utilisation d'un seul robot de manipulation et d'une seule cellule de tests pour plusieurs types de pièces à tester.

Mais cette machine présente aussi l'avantage de pouvoir être chargée avec des pièces à tester, aussi bien par robot que manuellement, et sa structure permet le remplacement d'un couple "berceau et connecteur-adaptateur", même pendant le fonctionnement de la machine comme suggéré sur la figure 3.

## Revendications

1. Machine permettant de tester au moins deux pièces (1) de type différent aptes à se présenter dans un ordre indéterminé sur un chemin de déplacement (2), chaque pièce comportant au moins une entrée (3) apte à être alimentée en un fluide ou analogue, **caractérisée par le fait qu'**elle comporte:
- un bâti (10) conformé sensiblement en "dais" et comprenant un plancher (11) apte à être dans une position sensiblement horizontale, un plafond (12) et des montants (13) pour maintenir ledit plafond dans une position sensiblement parallèle au plancher,
- un arbre (14),
- des moyens (15) pour monter ledit arbre (14) en rotation par rapport au plancher et au plafond autour d'un axe (16) sensiblement vertical,
- des moyens (17) pour commander la rotation dudit arbre (14),
- deux plateaux (21, 22),
- des moyens (23, 24) pour solidariser les deux plateaux avec ledit arbre (14) de façon qu'ils soient sensiblement dans deux plans horizontaux entre le plancher (11) et le plafond (12), à une distance l'un de l'autre supérieure à la hauteur de la plus haute des deux dites pièces (1),
- deux premier (31) et second (32) berceaux de réception des deux dites pièces (1), ces deux berceaux étant réalisés sur la face supérieure (33) du plateau inférieur (21),
- au moins deux premier (34) et second (35) connecteurs-adaptateurs montés en coopération avec au moins l'un des deux plateaux (21, 22) de façon que, lorsque les deux pièces (1) sont respectivement disposées dans leur berceau de réception (31, 32), le premier connecteur-adaptateur (34) soit apte à coopérer, via une commande adaptée, avec l'entrée (3) de la pièce (1) située dans le premier berceau de réception (31) et que le second connecteur-adaptateur (35) soit apte à coopérer, via une commande adaptée, avec l'entrée (3) de la pièce située dans le second berceau de réception (32),
- un connecteur d'alimentation en fluides (40),
- des moyens (41) pour associer le connecteur d'alimentation en fluides (40) audit bâti (10) de façon que, lors d'une commande de la rotation des plateaux (21, 22) par l'intermédiaire de l'arbre de rotation (14), les deux premier (34) et second (35) connecteurs-adaptateurs soient aptes à venir en position de coopération avec le connecteur d'alimentation en fluides (40), et
- des moyens (50) pour commander, d'une part la coopération du connecteur d'alimentation en fluides (40) avec un connecteur-adaptateur (34, 35), et d'autre part la coopération de ce connecteur-adaptateur (34, 35) avec l'entrée (3) de la pièce (1) qui lui est associée.

2. Machine selon la revendication 1, **caractérisée par le fait qu'**un connecteur-adaptateur est conformé en cloche et comporte au moins une plaque à liaisons multiples.

3. Machine selon la revendication 2, **caractérisée par le fait que** ladite plaque à liaisons multiples comporte des liaisons pour au moins l'un des fluides suivants: gaz, liquide, faisceau lumineux, électricité.

4. Machine selon l'une des revendications précédentes, **caractérisée par le fait que** lesdits connecteurs-adaptateurs sont montés en translation libre par rapport auxdits plateaux.

5. Machine selon la revendication 4, **caractérisée par le fait que** les moyens (50) pour commander, d'une part la coopération du connecteur d'alimentation en fluide (40) avec un connecteur-adaptateur (34, 35), et d'autre part la coopération de ce connecteur-adaptateur (34, 35) avec l'entrée (3) de la pièce (1) qui lui est associée, comportent au moins un vérin (56) constitué d'un cylindre et d'une tige de cylindre, le cylindre étant monté solidaire du plancher (11) de façon que la tige de cylindre se déplace par rapport au cylindre sensiblement verticalement pour coopérer avec l'ensemble des éléments suivants : pièce à tester (1), connecteur-adaptateur (34, 35) et connecteur d'alimentation (40).

6. Machine selon l'une des revendications précédentes, **caractérisée par le fait qu'**elle comporte un robot (51) pour prélever une pièce (1) se présentant sur le chemin de déplacement et la positionner sur le berceau de réception (31, 32) lui correspondant.

7. Machine selon l'une des revendications précédentes, **caractérisée par le fait que** les moyens (17) pour commander la rotation dudit arbre sont constitués par un moteur commandable (52).

8. Machine selon l'une des revendications précédentes, **caractérisée par le fait qu'**elle comporte un capteur d'identification (54) de la pièce à tester se présentant sur le chemin de déplacement (2).

9. Machine selon les revendications 5, 6, 7 et 8, **caractérisée par le fait qu'**elle comporte une unité centrale de gestion (53) reliée aux entrées-sorties du vérin (56), du moteur commandable (52), du robot (51) et du capteur d'identification (54).

10. Machine selon la revendication 9, **caractérisée par le fait que** l'unité centrale de gestion (53) comporte des moyens de tests (60) reliés au connecteur d'alimentation en fluides (40).

## Patentansprüche

1. Maschine, die ermöglicht, wenigstens zwei Teile (1) unterschiedlichen Typs, die auf einem Verlagerungsweg (2) in einer unbestimmten Reihenfolge vorhanden sein können, zu prüfen, wobei jedes Teil wenigstens einen Einlass (3) aufweist, der mit einem Fluid oder dergleichen versorgt werden kann, **dadurch gekennzeichnet, dass** sie umfasst:
- einen Rahmen (10), der im Wesentlichen wie ein "Baldachin" konstruiert ist und einen Boden (11), der eine im Wesentlichen horizontale Stellung einnehmen kann, eine Decke (12) sowie Stützen (13), die die Decke in einer zu dem Boden im Wesentlichen parallelen Stellung halten können, umfasst,
- eine Welle (14),
- Mittel (15), die die Welle (14) in Bezug auf den Boden und die Decke um eine im Wesentlichen vertikale Achse (16) drehbar anbringen,
- Mittel (17) zum Steuern der Drehung der Welle (14),
- zwei Platten (21, 22),
- Mittel (23, 24) zum Befestigen der beiden Platten an der Welle (14) in der Weise, dass sie sich im Wesentlichen in zwei horizontalen Ebenen zwischen dem Boden (11) und der Decke (12) in einem gegenseitigen Abstand, der größer als die Höhe des höchsten der zwei Teile (1) ist, befinden,
- einen ersten (31) und einen zweiten (32) Aufnahmeträger für die zwei Teile (1), wobei diese beiden Träger auf der oberen Fläche (33) der unteren Platte (21) ausgebildet sind,
- wenigstens einen ersten (34) und einen zweiten (35) Verbinder-Adapter, die in Zusammenwirkung mit wenigstens einer der zwei Platten (21, 22) in der Weise angebracht sind, dass der erste Verbinder-Adapter (34) dann, wenn die zwei Teile (1) in ihrem jeweiligen Aufnahmeträger (31, 32) angeordnet sind, über eine geeignete Steuerung mit dem Einlass (3) des Teils (1), das sich in dem ersten Aufnahmeträger (31) befindet, zusammenwirken kann, und der zweite Verbinder-Adapter (35) über eine geeignete Steuerung mit dem Einlass (3) des Teils, das sich in dem zweiten Aufnahmeträger (32) befindet, zusammenwirken kann,
- einen Fluidversorgungsverbinder (40),
- Mittel (41), die den Fluidversorgungsverbinder (40) dem Rahmen (10) in der Weise zuordnen, dass bei einer Steuerung der Drehung der Platten (21, 22) über die Drehwelle (14) die der erste (34) und der zweite (35) Verbinder-Adapter ihre Stellung für die Zusammenwirkung mit dem Fluidversorgungsverbinder (40) einnehmen können, und
- Mittel (50), die einerseits die Zusammenwirkung des Fluidversorgungsverbinders (40) mit einem Verbinder-Adapter (34, 35) und andererseits die Zusammenwirkung dieses Verbinder-Adapters (34, 35) mit dem Einlass (3) des ihm zugeordneten Teils (1) steuern.

2. Maschine nach Anspruch 1, **dadurch gekennzeichnet, dass** ein Verbinder-Adapter glockenförmig ist und wenigstens eine Platte mit mehreren Verbindungen umfasst.

3. Maschine nach Anspruch 2, **dadurch gekennzeichnet, dass** die mehrere Verbindungen aufweisende Platte Verbindungen für wenigstens eines der folgenden Fluide besitzt: Gas, Flüssigkeit, Lichtstrahl, Elektrizität.

4. Maschine nach einem der vorhergehenden Ansprüche, **dadurch gekennzeichnet, dass** die Verbinder-Adapter in Bezug auf die Platten translatorisch frei montiert sind.

5. Maschine nach Anspruch 4, **dadurch gekennzeichnet, dass** die Mittel (50), die einerseits die Zusammenwirkung des Fluidversorgungsverbinders (40) mit einem Verbinder-Adapter (34, 35) und andererseits die Zusammenwirkung dieses Verbinder-Adapters (34, 35) mit dem Einlass (3) des ihm zugeordneten Teils (1) steuern, wenigstens einen Stellzylinder (56) umfassen, der aus einem Zylinder und einer Zylinderstange gebildet ist, wobei der Zylinder fest am Boden (11) angebracht ist, derart, dass sich die Zylinderstange in Bezug auf den Zylinder im Wesentlichen vertikal verlagert, um mit der Gesamtheit der folgenden Elemente zusammenzuwirken: zu prüfendes Teil (1), Verbinder-Adapter (34, 35) und Versorgungsverbinder (40).

6. Maschine nach einem der vorhergehenden Ansprüche, **dadurch gekennzeichnet, dass** sie einen Roboter (51) umfasst, um ein Teil (1) zu entnehmen, das auf dem Verlagerungsweg vorhanden ist, und es in dem ihm entsprechenden Aufnahmeträger (31, 32) zu positionieren.

7. Maschine nach einem der vorhergehenden Ansprüche, **dadurch gekennzeichnet, dass** die Mittel (17) zum Steuern der Drehung der Welle durch einen steuerbaren Motor (52) gebildet sind.

8. Maschine nach einem der vorhergehenden Ansprüche, **dadurch ge** **kennzeichnet, dass** sie einen Identifizierungssensor (54) für das zu prüfende Teil, das sich auf dem Verlagerungsweg (2) befindet, umfasst.

9. Maschine nach den Ansprüchen 5, 6, 7 und 8, **dadurch gekennzeichnet, dass** sie eine Zentraleinheit (53) umfasst, die mit den Eingängen und Ausgängen des Stellzylinders (56), des steuerbaren Motors (52), des Roboters (51) und des Identifizierungssensors (54) verbunden ist.

10. Maschine nach Anspruch 9, **dadurch gekennzeichnet, dass** die Zentraleinheit (53) Prüfmittel (60) umfasst, die mit dem Fluidversorgungsverbinder (40) verbunden sind.

## Claims

1. A machine for testing at least two parts (1) of different types that can arrive in unspecified order on a travel path (2), each part having at least one inlet (3) suitable for being fed with a fluid or the like, the machine being **characterized by** the fact that it comprises:
· a stand (10) shaped substantially like a canopy and comprising a floor (11) suitable for being in a substantially horizontal position, a ceiling (12), and uprights (13) for holding said ceiling in a position substantially parallel to the floor;
· a shaft (14);
· means (15) for mounting said shaft (14) to rotate relative to the floor and the ceiling about an axis (16) that is substantially vertical;
· means (17) for controlling the rotation of said shaft (14);
· two turntables (21, 22);
· means (23, 24) for securing the two turntables to said shaft (14) in such a manner that they lie substantially in its two horizontal planes between the floor (11) and the ceiling (12), being spaced apart from each other by a distance that is greater than the height of the tallest of said at least two parts (1);
· first and second cradles (31, 32) for receiving said two parts (1), said two cradles being implemented on the top face (33) of the bottom turntable (21);
· at least first and second adapter-connectors (34, 35) mounted to co-operate with at least one of the two turntables (21, 22) so that when the two parts (1) are disposed in their respective receiver cradles (31, 32), the first adapter-connector (34) is suitable for co-operating, under suitable control, with the inlet (3) of the part (1) situated in the first receiver cradle (21), and the second adapter-connector (35) is suitable for co-operating, under suitable control, with the inlet (3) of the part situated in the second receiver cradle (32);
· a fluid feed connector (40);
· means (41) for associating the fluid feed connector (40) with said stand (10) in such a manner that when the turntables (21, 22) are controlled to turn by the rotary shaft (14), the first and second adapter-connectors (34, 35) are suitable for coming into position for co-operating with the fluid feed connector (40); and
· means (50) firstly for causing the fluid feed connector (40) to co-operate with one of the adapter-connectors (34, 35), and secondly for causing
said adapter-connector (34, 35) to co-operate with the inlet (3) of the part (1) that is associated therewith.

2. A machine according to claim 1, **characterized by** the fact that an adapter-connector is bell-shaped and includes at least one multiple connection plate.

3. A machine according to claim 2, **characterized by** the fact that said multiple connection plate includes connections for at least one of the following fluids: gas, liquid, light beam, electricity.

4. A machine according to any preceding claim, **characterized by** the fact that said adapter-connectors are mounted to move freely in translation relative to said turntables.

5. A machine according to claim 4, **characterized by** the fact that the means (50) for controlling both co-operation between the fluid feed connector (40) and an adapter-connector (34, 35) and co-operation between said adapter-connector (34, 35) and the inlet (3) of the associated part (1) comprise at least one actuator (56) constituted by a cylinder and a rod, the cylinder being secured to the floor (11) so that the rod moves substantially vertically relative to the cylinder to co-operate with the following set of elements: the part (1) for testing, an adapter-connector (34, 35), and the feed connector (40).

6. A machine according to any preceding claim, **characterized by** the fact that it includes a robot (51) for taking a part (1) arriving on the travel path and for positioning it on the receiver cradle (31, 32) that corresponds thereto.

7. A machine according to any preceding claim, **characterized by** the fact that the means (17) for controlling rotation of said shaft are constituted by a controllable motor (52).

8. A machine according to any preceding claim, **characterized by** the fact that it includes an identification sensor (54) for identifying the part for testing that has arrived on the travel path (2).

9. A machine according to claims 5, 6, 7, and 8, **characterized by** the fact that it includes a central management unit (53) connected to the inlets/outlets of the actuator (56), of the controllable motor (52), of the robot (51), and of the identification sensor (54).

10. A machine according to claim 9, **characterized by** the fact that the central management unit (53) includes test means (60) connected to the fluid feed connector (40).
